(19) Europäisches Patentamt
European Patent Office
Office européen des brevets

(11) **EP 4 693 458 A1**

(12) **EUROPEAN PATENT APPLICATION**
published in accordance with Art. 153(4) EPC

(43) Date of publication:
**11.02.2026 Bulletin 2026/07**

(21) Application number: **23930919.8**

(22) Date of filing: **15.12.2023**

(51) International Patent Classification (IPC):
*H01M 4/36* (2006.01)    *H01M 4/13* (2010.01)
*H01M 4/48* (2010.01)    *H01M 4/62* (2006.01)
*H01M 4/587* (2010.01)

(52) Cooperative Patent Classification (CPC):
**H01M 4/13; H01M 4/36; H01M 4/48; H01M 4/587;
H01M 4/62;** Y02E 60/10

(86) International application number:
**PCT/JP2023/044962**

(87) International publication number:
**WO 2024/202299 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2023 JP 2023052976**

(71) Applicant: **AESC Japan Ltd.
Yokohama-Shi, Kanagawa 220-0012 (JP)**

(72) Inventors:
• **AKAGAWA, Kazuhiro**
  **Zama-shi, Kanagawa 252-0012 (JP)**
• **LU, Chiaying**
  **Zama-shi, Kanagawa 252-0012 (JP)**
• **SHIMOJI, Risa**
  **Zama-shi, Kanagawa 252-0012 (JP)**

(74) Representative: **Becker, Eberhard
Becker Kurig & Partner
Patentanwälte mbB
Bavariastraße 7
80336 München (DE)**

(54) **NEGATIVE ELECTRODE FOR NONAQUEOUS ELECTROLYTE SECONDARY BATTERY, AND NONAQUEOUS ELECTROLYTE SECONDARY BATTERY USING SAME**

(57) An objective of the present invention is to suppress the expansion and contraction when charging and discharging a nonaqueous electrolyte secondary battery, including lithium ion secondary batteries, when an Si-based negative electrode active material is used, to improve the lifespan (cycle characteristics) of the nonaqueous electrolyte secondary battery, and to improve rapid charging properties. The negative electrode active material contains: a silicon-based active material (A1) containing $SiO_x$ (in the formula, x is a number satisfying $0.5 \leq x \leq 1.6$) doped with lithium; a silicon-based active material (A2) containing $SiO_x$ (in the formula, x is a number satisfying $0.5 \leq x \leq 1.6$) not doped with lithium; a carbon-based active material (B) composed of secondary particles formed by aggregating primary particles; and a carbon-based active material (C) composed of primary particles different from the primary particles of the carbon-based active material (B). If the value of the maximum average particle diameter among the average particle diameters is $D50_{max}$ and the value of the minimum average particle diameter among the average particle diameters is $D50_{min}$, the value of $D50_{max}/D50_{min}$ is smaller than 2.

EP 4 693 458 A1

**Description**

Technical Field

The present invention relates to a negative electrode for a nonaqueous electrolyte secondary battery, and a nonaqueous electrolyte secondary battery using the negative electrode for a nonaqueous electrolyte secondary battery.

Description of Related Art

Nonaqueous electrolyte secondary batteries have been put into practical use as automotive batteries including hybrid vehicles and electric vehicles, and are also used as batteries for small electronic devices including mobile terminals. As such batteries, lithium ion secondary batteries are particularly widely used. Lithium ion secondary batteries are required to have various characteristics such as output characteristics, energy density, capacity, lifespan, high temperature stability, and the like. In particular, in order to miniaturize batteries, improving the volumetric energy density of batteries and increasing capacity have become urgent issues. In particular, lithium ion secondary batteries for electric vehicles are required to improve energy density in order to further extend the driving range. For this reason, various improvements have been made to battery configurations including electrodes and electrolytes.

It is known to use graphite as a negative electrode active material for lithium ion secondary batteries. Graphite is inexpensive, has little deterioration due to charge and discharge cycles of batteries, and has high safety, so graphite is widely used. However, in conventional lithium ion secondary batteries using graphite material as the negative electrode active material, further improvement in energy density is difficult to expect, so exploration of negative electrode active material materials with even higher capacity is being conducted. As high-capacity negative electrode active material materials, silicon-based negative electrode active material materials containing silicon or silicon oxide (hereinafter sometimes referred to as "Si-based negative electrode active material materials" or "Si-based negative electrode active materials") are attracting attention.

For example, Patent Literature 1 discloses a negative electrode active material including a first silicon oxide particle group in which lithium is pre-doped and a second silicon oxide particle group in which lithium is not pre-doped. Also, Patent Literature 2 discloses a lithium ion secondary battery using three types of negative electrode active materials including $SiO_x$ as a negative electrode active material, graphite having an average particle diameter exceeding 15 $\mu$m and not more than 25 $\mu$m, and graphite having an average particle diameter of 8 $\mu$m or more and 15 $\mu$m or less and in which the surface of the graphite particles is coated with amorphous carbon.

Related Art

Patent Literature

Patent Literature 1: Japanese Patent Application Laid-Open No. 2020-17421
Patent Literature 2: Japanese Patent Application Laid-Open No. 2016-219275

SUMMARY

Technical Problem

In Patent Literature 1, the average particle diameter of the second silicon oxide particle group is specified relative to the average particle diameter of the first silicon oxide particle group. Moreover, in Patent Literature 2, when Li ions are introduced into the negative electrode, it is stated that cycle characteristics are improved by using $SiO_x$ in combination with graphite having an average particle diameter exceeding 15 $\mu$m and not more than 25 $\mu$m, and graphite particles having an average particle diameter of 8 $\mu$m or more and 15 $\mu$m or less. However, under these conditions, it is not sufficient to suppress the loss of contact between active material particles due to expansion and contraction of the negative electrode that is repeated during charge and discharge of the lithium ion secondary battery.

An objective of the present invention is to suppress the expansion and contraction during charge and discharge of a nonaqueous electrolyte secondary battery including lithium ion secondary batteries when an Si-based negative electrode active material is used, to improve the lifespan (cycle characteristics) of the nonaqueous electrolyte secondary battery, and to improve rapid charging performance.

Solution to the Problem

An embodiment of the present invention is a negative electrode for a nonaqueous electrolyte secondary battery including a negative electrode active material layer containing a negative electrode active material, a binder, and a conductive additive. The negative electrode includes a negative electrode active material layer containing a negative electrode active material, a binder, and a conductive additive,
the negative electrode active material contains a silicon-based active material (A1) containing $SiO_x$ (in which x is a number satisfying $0.5 \leq x \leq 1.6$) pre-doped with lithium,

a silicon-based active material (A2) containing $SiO_x$ (in which x is a number satisfying $0.5 \leq x \leq 1.6$) that is not pre-doped with lithium,
a carbon-based active material (B) composed of secondary particles formed by aggregation of primary particles, and
a carbon-based active material (C) composed of primary particles different from the primary particles of the carbon-based active material (B).

If the average particle diameters of the silicon-based active material (A1), the silicon-based active material (A2), the carbon-based active material (B), and the carbon-based active material (C) are defined as $D50_{A1}[\mu m]$, $D50_{A1}[\mu m]$, $D50_B[\mu m]$, and $D50_C[\mu m]$, respectively, the value of the maximum average particle diameter among the average particle diameters is defined as $D50_{max}$, and the value of the minimum average particle diameter among the average particle diameters is defined as $D50_{min}$, the value of $D50_{max}/D50_{min}$ is smaller than 2.

Effects

The negative electrode for a nonaqueous electrolyte secondary battery of the present invention can provide a negative electrode for a nonaqueous electrolyte secondary battery that suppresses expansion and contraction and is exemplary in rapid charge and discharge even when an Si-based negative electrode active material is used and a nonaqueous electrolyte secondary battery using the negative electrode.

DESCRIPTION OF EMBODIMENTS

Embodiments of the present invention are described below. An embodiment is a negative electrode for a nonaqueous electrolyte secondary battery including a negative electrode active material layer containing a negative electrode active material, a binder, and a conductive additive. The negative electrode includes a negative electrode active material layer containing a negative electrode active material, a binder, and a conductive additive, and
the negative electrode active material contains a silicon-based active material (A1) containing $SiO_x$ (in which x is a number satisfying $0.5 \leq x \leq 1.6$) pre-doped with lithium,

a silicon-based active material (A2) containing $SiO_x$ (in which x is a number satisfying $0.5 \leq x \leq 1.6$) that is not pre-doped with lithium,
a carbon-based active material (B) composed of secondary particles formed by aggregation of primary particles, and
a carbon-based active material (C) composed of primary particles different from the primary particles of the carbon-based active material (B).

If the average particle diameters of the silicon-based active material (A1), the silicon-based active material (A2), the carbon-based active material (B), and the carbon-based active material (C) are defined as $D50_{A1}[\mu m]$, $D50_{A1}[\mu m]$, $D50_B[\mu m]$, and $D50_C[\mu m]$, respectively, the value of the maximum average particle diameter among the average particle diameters is defined as $D50_{max}$, and the value of the minimum average particle diameter among the average particle diameters is defined as $D50_{min}$, the value of $D50_{max}/D50_{min}$ is smaller than 2.
In the embodiment, a nonaqueous electrolyte secondary battery is a battery that mainly uses an organic solvent-based electrolyte and is capable of repeatedly performing charging and discharging. A lithium ion secondary battery is cited as a nonaqueous electrolyte secondary battery. The nonaqueous electrolyte secondary battery contains a negative electrode for a nonaqueous electrolyte secondary battery as a constituent member thereof. In the embodiment, the negative electrode is a thin plate-shaped or sheet-shaped battery member in which a negative electrode active material layer is formed by applying or rolling and drying a mixture containing a negative electrode active material on a negative electrode current collector which is a metal foil such as copper foil. That is, the negative electrode is composed of the negative electrode current collector and the negative electrode active material layer containing the negative electrode active material applied on both surfaces thereof. In the embodiment, the negative electrode active material layer preferably contains a negative electrode active material, a binder, and a conductive additive. The negative electrode active material is a substance used in the negative electrode among substances involved in reactions that generate electrical energy. Also, the binder is generally a substance for binding negative electrode active material particles in order to bring particle-shaped negative electrode active materials into electrical contact with each other. The conductive additive is a material for reducing the resistance of the electrode.

In the embodiment, the negative electrode active material contains a silicon-based active material containing $SiO_x$ (in which x is a number satisfying $0.5 \leq x \leq 1.6$) and a carbon-based active material. The silicon-based active material contains a silicon-based active material (A1) which is a silicon oxide of chemical formula $SiO_x$ that is pre-doped with lithium, and a silicon-based active material (A2) which is a silicon oxide of chemical formula $SiO_x$ that is not pre-doped with lithium. Here, x in the formula is a number satisfying $0.5 \leq x \leq 1.6$. The silicon-based active material may be a single compound or a mixture of multiple compounds. The silicon-based active material is preferably in the form of particles having substantially uniform or non-uniform sizes. The negative electrode active material may further contain a lithium silicon compound. The lithium silicon compound is a compound containing lithium element and silicon element, such as chemical formula $Li_{4.4}Si$, $Li_{3.75}Si$, or $Li_4SiO_4$ (lithium silicate). The silicon-based active material (A1) pre-doped with lithium is a compound containing a lithium element and a silicon element such as $Li_4SiO_4$, and is preferably contained in a larger amount than the silicon oxide (A2) not pre-doped with lithium. The lithium silicon compound is a stable compound and does not release lithium during charge and discharge of the nonaqueous electrolyte secondary battery. Therefore, by using the lithium silicon compound in combination with a silicon-based active material that tends to cause volume change during charge and discharge of the nonaqueous electrolyte secondary battery, volume change of the negative electrode active material layer can be suppressed. In the specification, the average particle diameter of the silicon-based active material (A1) is denoted as $D50_{A1}$, and the average particle diameter of the silicon-based active material (A2) is denoted as $D50_{A2}$. A silicon-based active material having an average particle diameter of 7 $\mu$m or more and 13 $\mu$m can be used as the silicon-based active material (A1) and silicon-based active material (A2) of the embodiment.

In the specification, the particle diameter of negative electrode active material particles is expressed as $Da[\mu m]$, which represents the particle diameter when the cumulative particle volume from the small particle side reaches $a[\%]$ of the total particle volume based on the volume-based particle size distribution. D50 is the particle diameter (unit: $\mu$m) when the cumulative particle volume from the small particle side reaches 50[%] of the total particle volume based on the volume-based particle size distribution, and this is the average particle diameter.

The negative electrode active material further contains a carbon-based active material. The carbon-based active material is preferably natural graphite, artificial graphite, hard carbon, soft carbon, or any mixture thereof. Here, graphite is a carbon material of a hexagonal system hexagonal plate-like crystal, and may be called graphite, etc. Natural graphite and artificial graphite include natural graphite having a coating of amorphous carbon, and artificial graphite having a coating of amorphous carbon. Here, amorphous carbon is a carbon material that may have a structure partially similar to graphite, takes a structure in which microcrystals are randomly networked, and is amorphous as a whole. Examples of amorphous carbon include carbon black, coke, activated carbon, carbon fiber, hard carbon, soft carbon, mesoporous carbon, etc. When artificial graphite is used, it is preferable that an interlayer distance d value ($d_{002}$) is 0.33 nm or more. The crystal structure of artificial graphite is generally thinner than natural graphite. When artificial graphite is used as a negative electrode active material for nonaqueous electrolyte secondary batteries, particularly lithium ion secondary batteries, it is needed to have an interlayer distance into which lithium ions can be inserted. The interlayer distance capable of insertion and extraction of lithium ions can be estimated by the d value ($d_{002}$), and if the d value is 0.33 nm or more, insertion and extraction of lithium ions is performed without issues. In the embodiment, it is preferable to include at least two types of carbon-based active materials. The two types of carbon-based active materials are called a carbon-based active material (B) and a carbon-based active material (C), respectively. The carbon-based active material (B) is preferably a carbon-based active material consisting of secondary particles formed by aggregation of primary particles. The carbon-based active material (B) is preferably artificial graphite of which surface is coated with amorphous carbon. Also, the carbon-based active material (C) is a primary particle different from the primary particles of the carbon-based active material (B), and is a carbon-based active material in which primary particles do not aggregate and do not form secondary particles. The carbon-based active material (C) is preferably artificial graphite of which surface is not coated. In the specification, the average particle diameter of the carbon-based active material (B) is expressed as $D50_B$, and the average particle diameter of the carbon-based active material (C) is expressed as $D50_C$. A carbon-based active material having an average particle diameter of 10 to 30 $\mu$m can be used as the carbon-based active material (B) of the embodiment, and a carbon-based active material having an average particle diameter of 5 to 25 $\mu$m can be used as the carbon-based active material (C) of the embodiment.

In the embodiment, among the respective average particle diameters $D50_{A1}[\mu m]$, $D50_{A2}[\mu m]$, $D50_B[\mu m]$, and $D50_C[\mu m]$ of the silicon-based active material (A1), the silicon-based active material (A2), the carbon-based active material (B), and the carbon-based active material (C), when the value of the maximum average particle diameter is defined as $D50_{max}$ and the value of the minimum average particle diameter among the average particle diameters is defined as $D50_{min}$, it is preferable that the value of $D50_{max}/D50_{min}$ is smaller than 2. By combining negative electrode active materials having such average particle diameter relationships, the packing density of the negative electrode active material particles is optimized, and expansion and contraction accompanying charge and discharge may be suppressed.

Moreover, regarding the blending of the negative electrode active material, it is particularly preferable that the total content of the silicon-based active material (A1) and the silicon-based active material (A2) is greater than 5 mass% and less than 50 mass% with respect to the total amount of the negative electrode active material in the negative electrode active material layer. More preferably, the total content of the silicon-based active material (A1) and the silicon-based active material (A2) is greater than 10 mass% and less than 20 mass%. If the total content of the silicon-based active material (A1) and the silicon-based active material (A2) is too much, the volume change of the negative electrode active material during charge and discharge of the nonaqueous electrolyte secondary battery becomes large, which is not preferable. Moreover, if the total content of the silicon-based active material (A1) and the silicon-based active material (A2) is too little, the effect of achieving high energy density is difficult to obtain.

With respect to the total amount of the silicon-based active material (A1) and the silicon-based active material (A2), the ratio of the amount of the silicon-based active material (A1) pre-doped with lithium and the amount of the silicon-based active material (A2) not pre-doped with lithium is preferably 1:9 or more and 9:1 or less, and more preferably 1:2 or more and 2:1 or less. If the content of the silicon-based active material (A1) pre-doped with lithium is too much, the volume change of the negative electrode active material during charge and discharge of the nonaqueous electrolyte secondary battery becomes large, which is not preferable. Also, if the content of the silicon-based active material (A1) pre-doped with lithium is too little, the effect of achieving high energy density is difficult to obtain.

The above negative electrode active material can improve electrical contact by binding particles together with a binder. The binder preferably contains poly(meth)acrylic acid, a metal salt of poly(meth)acrylic acid, alkyl ester of poly(meth)acrylic acid, or any mixture thereof. Compounds suitable as binders are, for example, polyacrylic acid, polymethacrylic acid; sodium polyacrylate, potassium polyacrylate, sodium polymethacrylate, potassium polymethacrylate; ethyl polyacrylate, ethyl polyacrylate, butyl polyacrylate, methyl polymethacrylate, ethyl polymethacrylate, butyl polymethacrylate, and may be any mixture thereof. The content of the binder is preferably 2 mass% or more and less than 10 mass% with respect to the total solid content of the negative electrode active material layer. If the content of the binder is too much, the portion in which the active material surface is covered by the binder increases, so ion conductivity and electron conductivity may decrease. Also, if the content of the binder is too little, electrical contact between negative electrode active material particles may not be performed appropriately.

As a component of the binder, in addition to the above compounds, it is particularly preferable to further contain carboxymethyl cellulose (referred to as "CMC"), which is a derivative of cellulose, or a metal salt of carboxymethyl cellulose (for example, sodium carboxymethyl cellulose, potassium carboxymethyl cellulose). The carboxymethyl cellulose or metal salt of carboxymethyl cellulose plays a role in stabilizing the above binder compound and also stabilizes the electrical contact of the negative electrode active material. When CMC or a metal salt of CMC is further added as a component of the binder, the content of CMC or CMC metal salt is preferably 0.05 mass% or more and 1.5 mass% or less, particularly 0.08 mass% or more and 0.8 mass% or less, and further 0.15 mass% or more and 0.30 mass% or less, relative to the total solid content of the negative electrode active material layer.

In the embodiment, it is preferable that the total content of the silicon-based active material (A1) and the silicon-based active material (A1) is 5 mass% or more and 50 mass% or less with respect to the total solid content of the negative electrode active material layer, and the content of the binder is 2 mass% or more and 8 mass% or less with respect to the total solid content of the negative electrode active material layer.

It is further preferable that the total content of the silicon-based active material (A1) and the silicon-based active material (A2) is 10 mass% or more and 20 mass% or less with respect to the total solid content of the negative electrode active material layer, and the content of the binder is 2 mass% or more and 6 mass% or less with respect to the total solid content of the negative electrode active material layer.

Furthermore, it is even more preferable that the total content of the silicon-based active material (A1) and the silicon-based active material (A2) is 15 mass% or more and 20 mass% or less with respect to the total solid content of the negative electrode active material layer, and the content of the binder is 2.5 mass% or more and 3.8 mass% or less with respect to the total solid content of the negative electrode active material layer.

By appropriately adjusting the content of the silicon-based active material (A1) and the silicon-based active material (A2) and binder, the energy density of the nonaqueous electrolyte secondary battery can be improved.

The negative electrode active material layer preferably further contains a conductive additive. The conductive additive is a material for reducing the resistance of the electrode. As the conductive additive, carbon materials such as carbon fibers such as carbon nanofibers, carbon black such as acetylene black and Ketjen black, activated carbon, graphite, mesoporous carbon, fullerenes, and carbon nanotube are raised. In the embodiment, it is particularly preferable to use carbon nanotube (called "CNT") as the conductive additive. CNT is a substance in which a six-membered ring network (graphene) of carbon atoms has a single-layer or multi-layer coaxial tube structure, and there are single-wall carbon nanotube (single layer, called "SWCNT") and multi-wall carbon nanotube (multi-layer, called "MWCNT"). Any CNT may be used, but when expansion and contraction occurs in the negative electrode active material layer, it is preferable to use bundled SWCNT having a shape in which SWCNT gather and are made longer in diameter and longer in length than one SWCNT so that the conductive network in the negative electrode does not break. SWCNT is mixed with at least one of the silicon-based active material (A1), silicon-based active material (A2), carbon-based active material (B), and carbon-based active material (C) in a state of being dispersed in a solvent in advance, and by adhering SWCNT to the surface of the at least one active material, SWCNT that are made larger in diameter and longer can be disposed between at least two of the silicon-based active material (A1), silicon-based active material (A2), carbon-based active material (B), and carbon-based active material (C). Furthermore, in order to support the conductivity in the negative electrode active material layer, carbon black may be used together separately from SWCNT.

When CNT is used as the conductive additive, the content of CNT is preferably 0.01 mass% or more and 1 mass% or less, particularly 0.03 mass% or more and 0.8 mass% or less, and further 0.1 mass% or more and 0.5 mass% or less, with respect to the total solid content of the negative electrode active material layer.

In addition, electrode additives generally used for electrode formation, such as thickeners, dispersants, stabilizers, and the like, can be appropriately used in the negative electrode active material layer.

Another embodiment of the present invention is a nonaqueous electrolyte secondary battery containing at least the negative electrode for a nonaqueous electrolyte secondary battery of the above embodiment, a positive electrode for a nonaqueous electrolyte secondary battery, a separator, and a nonaqueous electrolyte.

The nonaqueous electrolyte secondary battery of the embodiment contains, as constituent members thereof, at least a negative electrode for a nonaqueous electrolyte secondary battery, a positive electrode for a nonaqueous electrolyte secondary battery, a separator, and a nonaqueous electrolyte.

In the embodiment, the positive electrode is a thin plate-shaped or sheet-shaped battery member in which a positive electrode active material layer is formed by applying or rolling and drying a mixture containing a positive electrode active material on a positive electrode current collector which is a metal foil such as aluminum foil. That is, the positive electrode is composed of the positive electrode current collector and the positive electrode active material layer containing the positive electrode active material applied on both surfaces or one surface thereof. In the embodiment, the positive electrode active material layer preferably contains a positive electrode active material and a binder. The positive electrode active material is a substance used for the positive electrode among substances involved in reactions that generate electrical energy. Also, the binder is generally a substance for binding positive electrode active material particles in order to bring particle-shaped positive electrode active materials into electrical contact with each other.

The positive electrode active material used in the embodiment preferably contains a lithium-nickel composite oxide as the positive electrode active material. The lithium-nickel composite oxide is a transition metal composite oxide containing lithium and nickel represented by the general formula $Li_xNi_yMe_{(1-y)}O_2$ (where Me is at least one or more metals selected from the group consisting of Al, Mn, Na, Fe, Co, Cr, Cu, Zn, Ca, K, Mg, and Pb). It is particularly preferable to contain a lithium-manganese composite oxide. Examples of the lithium-manganese composite oxide include lithium manganate ($LiMnO_2$) having a zigzag layered structure, spinel-type lithium manganate ($LiMn_2O_4$), and the like. The positive electrode active material particularly contains a lithium nickel manganese cobalt composite oxide having a layered crystal structure represented by the general formula $Li_xNi_yCo_zMn_{(1-y-z)}O_2$. Here, x in the general formula is $1 \leq x \leq 1.2$, y and z are positive numbers satisfying $y+z<1$, and the value of y is 0.5 or more. Since a single-phase composite oxide becomes difficult to synthesize when the proportion of manganese becomes large, it is desirable to set $1-y-z \leq 0.4$. To obtain a high-capacity battery, it is particularly preferable to set $y>1-y-z$ and $y>z$. The lithium-nickel composite oxide having this general formula is a lithium-nickel-cobalt-manganese composite oxide (hereinafter sometimes referred to as "NCM"). NCM is a lithium-nickel composite oxide suitably used for achieving high capacity of batteries.

As a binder that forms the positive electrode active material layer together with the positive electrode active material, fluorine resins such as polyvinylidene fluoride (PVDF), polytetrafluoroethylene (PTFE), polyvinyl fluoride (PVF), etc., conductive polymers such as polyanilines, polythiophenes, polyacetylenes, polypyrroles, etc., synthetic rubbers such as styrene butadiene rubber (SBR), butadiene rubber (BR), chloroprene rubber (CR), isoprene rubber (IR), acrylonitrile butadiene rubber (NBR), etc., or polysaccharides such as carboxymethyl cellulose (CMC), xanthan gum, guar gum, pectin, etc. can be raised.

Also, the positive electrode active material layer may contain a conductive additive in some cases. As conductive additives that may be used in some cases, carbon materials such as carbon fibers like carbon nanofibers, carbon black such as acetylene black and Ketjen black, activated carbon, graphite, mesoporous carbon, fullerenes, and carbon nanotubes can be raised. In the embodiment, it is particularly preferable to use carbon nanotubes (CNT) as the conductive additive. CNT is a substance in which a six-membered ring network of carbon atoms (graphene) has a single-layer or multi-layer coaxial tube structure, and there are single-wall carbon nanotubes (single-layer, SWCNT) and multi-wall carbon nanotubes (multi-layer, MWCNT). Either CNT may be used, but when expansion and contraction occurs in the positive electrode active material layer, in order that the conductive network in the positive electrode does not break, it is preferable to use a bundled SWCNT having a shape in which SWCNTs gather and are made longer in diameter and longer in length than a single SWCNT. Furthermore, in order to support conductivity in the positive electrode active material layer, carbon black may be used in combination separately from SWCNT. In addition, electrode additives generally used for electrode formation, such as thickeners, dispersants, and stabilizers, and the like, can be appropriately used in the positive electrode active material layer.

The nonaqueous electrolyte secondary battery of the embodiment contains a separator as a constituent member. For the separator, for example, a polyolefin film can be used. Polyolefin refers to a compound obtained by polymerizing or copolymerizing $\alpha$-olefins such as ethylene, propylene, butene, pentene, hexene, and the like, and examples thereof include polyethylene, polypropylene, polybutene, polypentene, polyhexene, and copolymers thereof. When a polyolefin film is used as the separator, it is convenient if the polyolefin film has a structure having pores that are closed when the battery temperature rises, that is, a porous or microporous polyolefin film. By having the polyolefin film have such a structure, even if the battery temperature rises by any chance, the separator can be closed (shut down) to cut off the ion flow. That is, a uniaxially stretched polyolefin film contracts when the battery is heated and the pores are blocked, so short circuits between the positive and negative electrodes may be prevented. In order to exhibit the shutdown effect, it is very preferable to use a porous polyethylene membrane.

Also, a crosslinked film can be used as a separator. Since porous or microporous polyolefin films have the property of contraction when heated, the film contracts and shuts down when the battery overheats. However, if the thermal shrinkage rate of the film is too large, the area of the film changes greatly, which may conversely cause a large current to flow. Crosslinked polyolefin films have an appropriate thermal shrinkage rate, so even during overheating, the crosslinked polyolefin films can contract just enough to block pores without greatly changing the area.

The separator used in the embodiment may have a heat-resistant fine particle layer on one side or both sides of the separator. In this case, the heat-resistant fine particle layer provided to prevent overheating of the battery has heat resistance with a heat-resistant temperature of 150°C or higher and is composed of inorganic fine particles that are stable to electrochemical reactions. As such inorganic fine particles, inorganic oxides such as silica, alumina ($\alpha$-alumina, $\beta$-alumina, 0-alumina), iron oxide, titanium oxide, barium titanate, zirconium oxide; minerals such as boehmite, zeolite, apatite, kaolin, spinel, mica, mullite can be raised.

The nonaqueous electrolyte secondary battery of the embodiment contains a nonaqueous electrolyte. The nonaqueous electrolyte is an electrically conductive substance in which an ionic substance is dissolved in an organic solvent. The above-mentioned negative electrode for a nonaqueous electrolyte secondary battery and the positive electrode for a nonaqueous electrolyte secondary battery are superimposed, a separator is disposed between the negative electrode and the positive electrode, and a nonaqueous electrolyte secondary battery element containing the separator and the nonaqueous electrolyte is one unit of the main constituent members of the nonaqueous electrolyte secondary battery. Usually, a laminate formed by superimposing multiple negative electrodes for a nonaqueous electrolyte secondary battery and multiple positive electrodes for a nonaqueous electrolyte secondary battery via multiple separators is immersed in the nonaqueous electrolyte. The nonaqueous electrolyte that can be used in the embodiment is mainly a nonaqueous electrolytic solution, and is preferably a mixture containing chain carbonates such as dimethyl carbonate (DMC), diethyl carbonate (DEC), ethyl methyl carbonate (EMC), din-propyl carbonate, di-t-propyl carbonate, di-n-butyl carbonate, di-isobutyl carbonate, or di-t-butyl carbonate, and cyclic carbonates such as propylene carbonate (PC) and ethylene carbonate (EC). The nonaqueous electrolytic solution is obtained by dissolving lithium salts such as lithium hexafluorophosphate (LiPF$_6$), lithium borofluoride (LiBF$_4$), LiFSI, and lithium perchlorate (LiClO$_4$) in such a carbonate mixture.

The nonaqueous electrolyte may further contain, as an additive, a cyclic carbonate compound different from the above cyclic carbonate. Vinylene carbonate (VC) can be mentioned as a cyclic carbonate used as an additive. Also, a cyclic carbonate compound having halogen may be used as an additive. The cyclic carbonates are also compounds that form protective films on the negative electrode for a nonaqueous electrolyte secondary battery and the positive electrode for a nonaqueous electrolyte secondary battery during the charge and discharge process of the nonaqueous electrolyte secondary battery. In particular, the compounds can prevent attack on the positive electrode active material containing lithium-nickel composite oxide by sulfur-containing compounds such as the above disulfonic acid compound or disulfonic acid ester compound. As cyclic carbonate compounds having halogen, fluoroethylene carbonate (FEC), difluoroethylene carbonate, trifluoroethylene carbonate, chloroethylene carbonate, dichloroethylene carbonate, trichloroethylene carbonate, etc. can be mentioned. Fluoroethylene carbonate, which is a cyclic carbonate compound having halogen and having unsaturated bonds, is particularly preferably used.

Furthermore, the nonaqueous electrolyte may further contain a disulfonic acid compound as an additive. The disulfonic acid compound is a compound having two sulfo groups in one molecule, and contains disulfonic acid salt compounds in which sulfo groups form salts together with metal ions, or disulfonic acid ester compounds in which sulfo groups form esters. One or two of the sulfo groups of the disulfonic acid compound may form salts together with metal ions, or may be in an anionic state. Examples of disulfonic acid compounds include methanedisulfonic acid, 1,2-ethanedisulfonic acid, 1,3-propanedisulfonic acid, 1,4-butanedisulfonic acid, benzenedisulfonic acid, naphthalenedisulfonic acid, biphenyldisulfonic acid, and salts thereof (lithium methanedisulfonate, lithium 1,2-ethanedisulfonate, etc.), and anions thereof (methanedisulfonic acid anion, 1,2-ethanedisulfonic acid anion, etc.). Furthermore, disulfonic acid ester compounds are included as disulfonic acid compounds, including chain disulfonic acid esters such as alkyl diesters or aryl diesters of methanedisulfonic acid, 1,2-ethanedisulfonic acid, 1,3-propanedisulfonic acid, 1,4-butanedisulfonic acid, benzenedisulfonic acid, naphthalenedisulfonic acid, or biphenyldisulfonic acid; as well as cyclic disulfonic acid esters such as methylene methanedisulfonic acid ester, ethylene methanedisulfonic acid ester, propylene methanedisulfonic acid ester, etc.

The nonaqueous electrolyte secondary battery of the embodiment is usually sealed with an exterior body. Sealing means that at least a part of the nonaqueous electrolyte secondary battery element is wrapped with an exterior body material so as not to be exposed to outside air. The exterior body of the nonaqueous electrolyte secondary battery is a housing having gas barrier properties and capable of sealing the nonaqueous electrolyte secondary battery element, or a bag-shaped one composed of a flexible material. For the exterior body, aluminum cans, aluminum laminate sheets obtained by laminating aluminum foil and polypropylene, etc. can be suitably used. That is, any material may be used for the exterior body as long as it is a material that does not allow the nonaqueous electrolyte to leach to the outside. The outermost layer of the exterior body has a heat-resistant protective layer such as polyester, polyamide, liquid crystalline polymer, etc., and the innermost layer has polyethylene, polypropylene, ionomer, acid-modified polyethylene such as maleic acid-modified polyethylene, acid-modified polypropylene such as maleic acid-modified polypropylene, polyethylene terephthalate (PET), polyethylene naphthalate (PEN), polyethylene isophthalate (PEI), blends of PET and PEN, blends of PET and PEI, polyamide resin, blends of polyamide resin and PET, blends of xylylene group-containing polyamide and PET, etc. A laminate film having a sealant layer composed of thermoplastic resin can be used. The exterior body may be formed using one or multiple laminate films combined and bonded or welded, and further multilayered. Aluminum, tin, copper, nickel, stainless steel can be used as the gas barrier metal layer. The thickness of the metal layer is preferably 30 to 50 $\mu$m. Particularly suitably, the aluminum laminate, which is a laminate of aluminum foil and polymers such as polyethylene and polypropylene, can be used.

The nonaqueous electrolyte secondary battery of the embodiment may be in various forms such as a coin-type battery, a laminate type battery, a wound-type battery, and the like.

Example

The embodiments of the present invention have been described above. Below, examples of the present invention will be described. Both the above embodiments and the examples described below are merely illustrative explanations of the present invention, and are not intended to limit the technical scope of the present invention to the configurations of specific embodiments or specific examples.

(Preparation of positive electrode, all examples and comparative examples)

Li(Ni$_{0.9}$Co$_{0.05}$Mn$_{0.05}$)O$_2$ (97.5 mass%) as a positive electrode active material, polyvinylidene fluoride (PVDF, 1.5 mass%) as a positive electrode binder, and carbon nanotube (multi-wall carbon nanotube (MWCNT 1 mass%)) as a conductive additive were mixed to form a positive electrode active material mixture. A positive electrode slurry was prepared by dispersing the positive electrode active material mixture in N-methyl-2-pyrrolidone. The positive electrode slurry was uniformly applied to one surface of an aluminum current collector having a thickness of 12 $\mu$m. The thickness of the coating film was adjusted so that the initial charge capacity per unit area became 4.0 mAh/cm$^2$. After drying, compression molding was performed with a roll press, and a positive electrode was prepared by adjusting so that the density of the positive electrode active material layer became 3.5 g/cm$^3$.

(Preparation of negative electrode, Example 1)

As the negative electrode active material, a silicon-based active material (A1) which is SiO$_x$ (x=1, D$_{50}$=10.8$\mu$m) pre-doped with Li, a silicon-based active material (A2) which is SiO$_x$ (x=1, D$_{50}$=11.8$\mu$m) not pre-doped with Li, a carbon-based active material (B) which is artificial graphite (D$_{50}$: 13.9$\mu$m) consisting of secondary particles in which primary particles are aggregated, and a carbon-based active material (C) which is artificial graphite (D$_{50}$: 9.5$\mu$m) consisting of primary particles that do not aggregate with each other and do not form secondary particles, were used. A negative electrode active material mixture was obtained with a negative electrode active material mass ratio (mass ratio of SiO$_x$ of the silicon-based active material (A1) and the silicon-based active material (A2) to artificial graphite of the carbon-based active material (B) and the carbon-based active material (C) of the negative electrode, expressed as ([(A1)+(A2)]/[(B)+(C)])) of 15/85, and a mass ratio of the carbon-based active material (B) to the carbon-based active material (C) of 1/1. The active material mixture (96.6 mass%), the polyacrylic acid-based binder (trade name: 10CLPAH, FUJIFILM Wako Pure Chemical Corporation, 3.0 mass%) as a negative electrode binder, single-wall carbon nanotube (SWCNT, 0.3 mass%) as a conductive additive, and carboxymethyl cellulose (CMC, 0.1 mass%) were dissolved and dispersed in an aqueous solvent to prepare a negative electrode slurry. The negative electrode slurry was uniformly applied onto a Cu current collector having a thickness of 8$\mu$m. The thickness of the coating film was adjusted so that the initial charge capacity per unit area became 4.3mAh/cm$^2$. Thereafter, compression molding was performed with a roll press, and a negative electrode was prepared by adjusting so that the density of the negative electrode active material layer became 1.65g/cm$^3$.

Incidentally, the SiO$_x$ used in the examples can be obtained as appropriate from, for example, Sigma-Aldrich Co., High Purity Chemical Laboratory Co., Ltd., Kanto Chemical Co., Inc., FUJIFILM Wako Pure Chemical Corporation, etc., and the surface state such as surface coating components and roughness, particle diameters, etc. can be adjusted by using the aforementioned alone or in combination and using known methods such as heat treatment such as firing, chemical treatment by a CVD method, etc., mechanical treatment such as pulverization and classification, and sputtering. The lithium-doped silicon-based active material (A1) was obtained by mixing SiO$_x$ powder not doped with lithium and lithium hydride, and then firing at a temperature of about 900°C or higher under an argon atmosphere.

Also, graphite can be obtained as appropriate from Nippon Graphite Industries Co., Ltd., Resonac Corporation, etc., and the surface state such as surface coating components and roughness, particle diameters, etc. can be adjusted by using the aforementioned alone or in combination and using known methods such as heat treatment such as firing, chemical treatment by a CVD method, etc., mechanical treatment such as pulverization and classification, and sputtering.

Note that the conductive additive used here is a bundled SWCNT having a shape in which SWCNTs gather and are made longer in diameter and longer in length than a single SWCNT, with a length of about 1 $\mu$m and a diameter of about 10 nm. Multiple such SWCNTs are disposed on the surface of the negative electrode active material so as to contact any two or more types of negative electrode active materials among the silicon-based active material (A1), silicon-based active material (A2), carbon-based active material (B), and carbon-based active material (C). Such SWCNTs can be obtained from, for example, Meijo Nano Carbon Co., Ltd., Honjo Chemical Corporation, and Kusumoto Chemicals, Ltd.

In other examples and comparative examples, the type of the negative electrode active material used and the blending amount of the negative electrode active material were changed as shown in Table 1. The sources of the silicon-based active material (A1) and the silicon-based active material (A2) which are SiO$_x$ and the carbon-based active material (B) and the carbon-based active material (C) were the same as those in Example 1. The mass ratio of the carbon-based active material (B) to the carbon-based active material (C) was set to 7:3 for Example 9, and was set to 1:1 for other examples and comparative examples in the same manner as Example 1. The types and usage amounts of the binder and conductive additive, and the method for preparing the negative electrode active material layer were also the same as Example 1 in all examples and comparative examples.

(Preparation of lithium ion secondary battery, all examples and comparative examples)

A positive electrode and a negative electrode cut out to 3 cm $\times$ 3 cm were disposed to face each other with a separator interposed therebetween. As the separator, a 10 $\mu$m thick microporous polyethylene film having ceramic coating on both surfaces was used.

The nonaqueous electrolyte was prepared by mixing an organic solvent and a supporting salt. The cyclic carbonate (EC) and chain carbonates (DEC, EMC) were adjusted to a volume ratio of 1/6, and furthermore, lithium hexafluorophosphate (LiPF$_6$) and fluoroethylene carbonate (FEC) were added as supporting salts.

The above positive electrode, negative electrode, separator, and nonaqueous electrolyte were disposed in a laminate exterior body, the laminate was sealed, and a lithium ion secondary battery which is a nonaqueous electrolyte secondary battery was prepared. The positive electrode and negative electrode had tabs connected thereto and were in a state of being electrically connected from the outside of the laminate.

(Evaluation of lithium ion secondary battery)

For the lithium ion secondary batteries prepared in each of the examples and comparative examples, the capacity retention rate and the decrease in average voltage during 1C discharge were measured and evaluated by the following methods.

(Energy density)

The prepared battery was charged at 7.2 mA, and after the upper limit voltage reached 4.2 V, the prepared battery was charged at constant voltage until the total charging time became 12 hours. Thereafter, the prepared battery was discharged at constant current of 7.2 mA until the lower limit voltage became 2.5 V. After charging again under the same conditions, the prepared battery was left in a constant temperature bath at 45°C for 3 days, discharged again under the same conditions, and charge and discharge was performed once more. The capacity and average voltage during the final discharge were evaluated. Also, after completion of the evaluation, the thickness of the laminate type battery (hereinafter, may be simply referred to as "cell") was evaluated.

From the thickness of the cell, the sum of the thickness of the positive electrode active material layer, half the thickness of the positive electrode current collector, the thickness of the separator, the thickness of the negative electrode active material layer, and half the thickness of the negative electrode current collector, which are unit components of the laminate type battery, was obtained. Specifically, from the thickness of the cell, the thickness of the laminate, half the thickness of the positive electrode current collector, and half the thickness of the negative electrode current collector were subtracted.

The following calculation formula:

(capacity during cell discharge) × (average voltage during cell discharge) / (electrode area) / (thickness of positive electrode active material layer + half thickness of positive electrode current collector + thickness of separator + thickness of negative electrode active material layer + half thickness of negative electrode current collector) [Formula 1]

From this, the energy density of the unit component portion of the laminate type battery was determined.

(Capacity retention rate)

The prepared battery was disposed in a constant temperature bath at 45°C, charged at 30 mA, and after the upper limit voltage reached 4.2 V, the prepared battery was charged at constant voltage until the total charging time became 2.5 hours. Thereafter, the prepared battery was discharged at constant current of 30 mA until the lower limit voltage became 2.5 V. The charge and discharge was repeated 100 times, and the ratio of the discharge capacity at the 100th cycle to the discharge capacity at the 1st cycle was taken as the capacity retention rate after 300 cycles.

The following table shows the results of examples and comparative examples in which the particle diameters and blending ratios of the silicon-based active material (A1), silicon-based active material (A2), carbon-based active material (B), and carbon-based active material (C) were changed using the same preparation method as Example 1. Unless otherwise specified, the values expressed as percentages in the table and elsewhere are ratios relative to the total solid content mass of the negative electrode active material layer.

[Table 1]

Table 1: Blending of the negative electrode active material and battery characteristics

| | Silicon-based active material (A1) D50$_{A1}$ [μm] | Silicon-based active material (A2) D50$_{A2}$ [μm] | Carbon-based active material (B) D50$_B$ [μm] | Carbon-based active material (C) D50$_C$ [μm] | D50$_{max}$/D50$_{min}$ | Negative electrode active material mass ratio [(A1)+(A2)]/[(B)+(C)] | Capacity retention rate after 300 cycles [%] | Energy density [Wh/L] |
|---|---|---|---|---|---|---|---|---|
| Example 1 | 10.8 | 11.3 | 13.9 | 9.5 | 1.46 | 15:85 | 94.9 | 773 |
| Example 2 | 10.8 | 11.3 | 13.9 | 9.5 | 1.46 | 15:85 | 95.3 | 765 |
| Example 3 | 10.8 | 11.3 | 13.9 | 9.5 | 1.46 | 15:85 | 95.5 | 766 |
| Example 4 | 10.8 | 11.3 | 13.9 | 9.5 | 1.46 | 15:85 | 93.3 | 741 |
| Example 5 | 7.9 | 8.5 | 13.9 | 9.5 | 1.76 | 15:85 | 94.3 | 770 |
| Example 6 | 7.9 | 8.5 | 13.9 | 9.5 | 1.76 | 15:85 | 94.4 | 763 |
| Example 7 | 7.9 | 8.5 | 13.9 | 9.5 | 1.76 | 15:85 | 95.0 | 757 |
| Example 8 | 7.9 | 8.5 | 13.9 | 9.4 | 1.76 | 15:85 | 93.0 | 740 |
| Example 9 | 10.8 | 11.3 | 11.0 | 12.5 | 1.16 | 15:85 | 95.3 | 749 |
| Example 10 | 10.8 | 11.3 | 17.3 | 9.5 | 1.82 | 15:85 | 95.0 | 752 |
| Example 11 | 10.8 | 11.3 | 13.9 | 9.5 | 1.46 | 10:90 | 95.5 | 730 |
| Example 12 | 10.8 | 11.3 | 13.9 | 9.5 | 1.46 | 20:80 | 95.0 | 782 |
| Comparative Example 1 | 7.9 | 8.5 | 22.5 | 12.5 | 2.05 | 15:85 | 83.0 | 750 |
| Comparative Example 2 | 5.2 | 6.0 | 13.9 | 9.5 | 2.67 | 15:85 | Rapid deterioration | - |
| Comparative Example 3 | 7.9 | 8.5 | 17.3 | 9.5 | 2.19 | 15:85 | Rapid deterioration | - |
| Comparative Example 4 | 10.8 | 11.3 | 13.9 | 9.5 | 1.46 | 15:85 | 85.6 | 763 |
| Comparative Example 5 | 7.9 | 8.5 | 13.9 | 9.5 | 1.76 | 15:85 | 84.7 | 757 |

The nonaqueous electrolyte secondary battery using the negative electrode for a nonaqueous electrolyte secondary battery of the embodiment of the present invention has high energy density and a high capacity retention rate after charge and discharge. On the other hand, the nonaqueous electrolyte secondary battery using the negative electrode for a nonaqueous electrolyte secondary battery of the comparative example shows a decrease in either the energy density or capacity retention rate, and could not improve both the energy density and lifespan. By optimizing the blending ratio and particle diameter of the silicon-based active material and graphite-based active material, appropriate particle packing density of the negative electrode active material layer can be obtained, and by suppressing expansion of the electrode, the energy density and cycle capacity retention rate of the nonaqueous electrolyte secondary battery can be improved.

In a composite negative electrode containing a silicon-based active material (A1), a silicon-based active material (A2), a carbon-based active material (B), and a carbon-based active material (C), among the respective average particle diameters, by adjusting $D50_{max}/D50_{min}$, which is the ratio of the maximum average particle diameter $D50_{max}$ and the minimum average particle diameter $D50_{min}$, within a predetermined range, the packing density of the negative electrode active material particles is optimized, and it is considered that expansion and contraction accompanying charge and discharge is suppressed. Also, when the average particle diameters of the silicon-based active material (A1), silicon-based active material (A2), carbon-based active material (B), and carbon-based active material (C) are large, a tendency for the capacity retention rate of the battery to become large is observed, and it can be understood from the table that it is preferable that the average particle diameter of the active material exceeds $5\mu m$, but when $D50_{max}/D50_{min}$ exceeds 2, the packing density of the negative electrode active material does not increase, and it is considered that expansion and contraction of the negative electrode active material layer cannot be suppressed.

As described above, the negative electrode for a nonaqueous electrolyte secondary battery of the present invention has been described in detail, but the present invention is not limited to the above embodiments and the above examples, and it is needless to say that various improvements and modifications may be made within the scope that does not depart from the spirit of the present invention.

**Claims**

1. A negative electrode for a nonaqueous electrolyte secondary battery, in which

the negative electrode comprises a negative electrode active material layer containing a negative electrode active material, a binder, and a conductive additive,
the negative electrode active material contains a silicon-based active material (A1) containing $SiO_x$ (in which x is a number satisfying $0.5 \leq x \leq 1.6$) pre-doped with lithium,

a silicon-based active material (A2) containing $SiO_x$ (in which x is a number satisfying $0.5 \leq x \leq 1.6$) that is not pre-doped with lithium,
a carbon-based active material (B) composed of secondary particles formed by aggregation of primary particles, and
a carbon-based active material (C) composed of primary particles different from the primary particles of the carbon-based active material (B), and

if average particle diameters of the silicon-based active material (A1), the silicon-based active material (A2), the carbon-based active material (B), and the carbon-based active material (C) are defined as $D50_{A1}[\mu m]$, $D50_{A1}[\mu m]$, $D50_B[\mu m]$, and $D50_C[\mu m]$, respectively, a value of the maximum average particle diameter among the average particle diameters is defined as $D50_{max}$, and a value of the minimum average particle diameter among the average particle diameters is defined as $D50_{min}$, a value of $D50_{max}/D50_{min}$ is smaller than 2.

2. The negative electrode for a nonaqueous electrolyte secondary battery according to claim 1, wherein the carbon-based active material (B) and the carbon-based active material (C) contain artificial graphite, hard carbon, soft carbon, or any mixture thereof.

3. The negative electrode for a nonaqueous electrolyte secondary battery according to claim 1 or 2, wherein the carbon-based active material (B) is artificial graphite having a surface coated with amorphous carbon, and the carbon-based active material (C) is artificial graphite having an uncoated surface.

4. The negative electrode for a nonaqueous electrolyte secondary battery according to any one of claims 1 to 3, wherein a total content of the silicon-based active material (A1) and the silicon-based active material (A2) is 10 mass% or more and 20 mass% or less with respect to a total amount of the silicon-based active material (A1), the silicon-based active material (A2), the carbon-based active material (B), and the carbon-based active material (C) in the negative electrode.

5. The negative electrode for a nonaqueous electrolyte secondary battery according to any one of claims 1 to 4, wherein the conductive additive contains carbon nanotubes.

6. The negative electrode for a nonaqueous electrolyte secondary battery according to any one of claims 1 to 5, wherein the conductive additive is a bundled single-wall carbon nanotube in which single-wall carbon nanotubes are assembled.

7. The negative electrode for a nonaqueous electrolyte secondary battery according to any one of claims 1 to 6, wherein a part of the conductive additive exists in a state of being previously adhered to a surface of at least one of the silicon-based active material (A1), the silicon-based active material (A2), the carbon-based active material (B), and the carbon-based active material (C).

8. The negative electrode for a nonaqueous electrolyte secondary battery according to any one of claims 1 to 7, wherein the binder contains polyacrylic acid.

9. A nonaqueous electrolyte secondary battery, comprising at least the negative electrode for a nonaqueous electrolyte secondary battery according to any one of claims 1 to 8, a positive electrode for a nonaqueous electrolyte secondary battery, a separator, and an electrolyte.

## INTERNATIONAL SEARCH REPORT

| International application No. |
|---|
| **PCT/JP2023/044962** |

### A. CLASSIFICATION OF SUBJECT MATTER

*H01M 4/36*(2006.01)i; *H01M 4/13*(2010.01)i; *H01M 4/48*(2010.01)i; *H01M 4/62*(2006.01)i; *H01M 4/587*(2010.01)i

FI: H01M4/36 E; H01M4/48; H01M4/587; H01M4/36 C; H01M4/62 Z; H01M4/36 B; H01M4/13

According to International Patent Classification (IPC) or to both national classification and IPC

### B. FIELDS SEARCHED

Minimum documentation searched (classification system followed by classification symbols)

H01M4/36; H01M4/13; H01M4/48; H01M4/62; H01M4/587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2023-503706 A (CONTEMPORARY AMPEREX TECHNOLOGY CO., LTD.) 31 January 2023 (2023-01-31)<br>paragraphs [0001], [0028]-[0033], [0135]-[0137], [0144], [0149], [0169]-[0187] | 1-9 |
| Y | JP 2022-187707 A (SHIN-ETSU CHEMICAL CO., LTD.) 20 December 2022 (2022-12-20)<br>paragraph [0055] | 1-9 |
| Y | WO 2021/085255 A1 (MURATA MANUFACTURING CO., LTD.) 06 May 2021 (2021-05-06)<br>paragraph [0044], fig. 4 | 6 |
| Y | JP 2022-529987 A (LG ENERGY SOLUTION LTD.) 27 June 2022 (2022-06-27)<br>paragraph [0010] | 6 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

EP 4 693 458 A1

## INTERNATIONAL SEARCH REPORT
### Information on patent family members

International application No.

**PCT/JP2023/044962**

| Patent document cited in search report | | | Publication date (day/month/year) | Patent family member(s) | | | Publication date (day/month/year) |
|---|---|---|---|---|---|---|---|
| JP | 2023-503706 | A | 31 January 2023 | US | 2022/0367872 | A1 | |
| | | | | paragraphs [0002], [0033]-[0039], [0178]-[0180], [0189], [0195], [0215]-[0239] | | | |
| | | | | EP | 4075542 | A1 | |
| | | | | KR | 10-2022-0110862 | A | |
| | | | | CN | 115917780 | A | |
| | | | | WO | 2022/140902 | A1 | |
| JP | 2022-187707 | A | 20 December 2022 | WO | 2022/259920 | A1 | |
| | | | | paragraph [0055] | | | |
| WO | 2021/085255 | A1 | 06 May 2021 | US | 2022/0246979 | A1 | |
| | | | | paragraph [0061], fig. 4 | | | |
| | | | | CN | 114641871 | A | |
| JP | 2022-529987 | A | 27 June 2022 | US | 2022/0320518 | A1 | |
| | | | | paragraph [0013] | | | |
| | | | | WO | 2021/066554 | A1 | |
| | | | | EP | 3951953 | A1 | |
| | | | | KR | 10-2021-0040801 | A | |
| | | | | CN | 113785422 | A | |

Form PCT/ISA/210 (patent family annex) (July 2022)

15

**EP 4 693 458 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020017421 A
- JP 2016219275 A